# EUROPEAN PATENT APPLICATION

(11) **EP 4 270 191 A1**
(43) Date of publication of application: **01.11.2023**
(21) Application number: 23305408.9
(22) Date of filing: 24.03.2023
(51) Int. Cl.: G06F 9/50

(54) **EMBEDDED SYSTEM AND MESSAGE PROCESSING METHOD**

(30) Priority: 29.04.2022 CN 202210474025
(71) Applicant: Schneider Electric Industries SAS, 92500 Rueil Malmaison (FR)
(72) Inventor: REN, Fengyue, Shanghai, 201203 (CN); HU, Yingcen, Shanghai, 201203 (CN)
(74) Representative: Manitz Finsterwald Patent- und Rechtsanwaltspartnerschaft mbB

(57) **Abstract**

The present disclosure discloses an embedded system and a message processing method. The embedded system includes a field programmable gate array (FPGA) configured to determine at least one first generic object-oriented substation event (GOOSE) message to which the embedded system subscribes from a plurality of externally received GOOSE messages, wherein each first GOOSE message triggers an execution of one first task, and the first task is preconfigured as a plurality of subtasks; a first processing core configured to execute at least one first subtask of the plurality of subtasks; and a second processing core configured to execute at least one second subtask of the plurality of subtasks; wherein an execution of a 1st first subtask of the at least one first subtask is triggered by the first GOOSE message, and the at least one second subtask is executed after an execution of the at least one first subtask is completed.

## Description

### TECHNICAL FIELD

Embodiments of the present disclosure relate to an embedded system and a message processing method.

### BACKGROUND

A Generic Object Oriented Substation Event (GOOSE) is a control class and message structure in a Generic Substation Event (GSE) model.

In order to meet the real-time requirements of GOOSE, it is usually necessary that GOOSE-related tasks are set to be handled in a real-time operating system. For example, GOOSE publishing and GOOSE subscribing functionalities are usually handled in a real time operating system such as VxWorks. In general, in order to meet the P2 requirements for GOOSE performance, it is necessary not only to have a power System on Chip (SoC), a real-time operating system and sufficient system storage resources, but also to have suitable optimization for data processing.

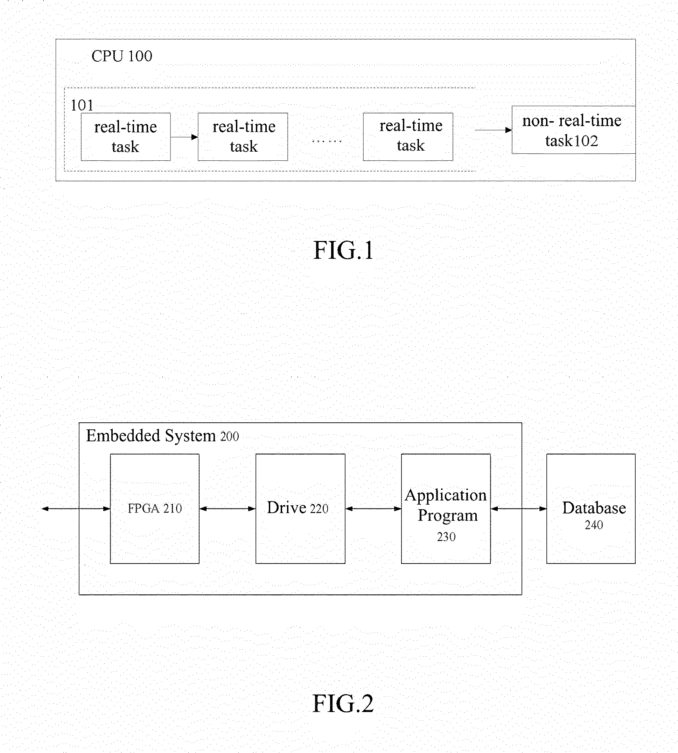

FIG. 1 illustrates a schematic diagram of the processing flow of a traditional GOOSE message.

In FIG. 1, a Central Process Unit (CPU) 100 processes all of real-time tasks and non-real-time tasks. Real-time tasks 101 include GOOSE-related tasks as well as other real-time tasks that are not related to GOOSE. In CPU 100, both real-time tasks 101 and non-real-time tasks 102 are executed in a serial manner, and the GOOSE-related tasks usually do not have the highest priorities. In Ethernet, a large number of GOOSE messages are published by many devices, but most of these GOOSE messages are not demanded by a receiving device, for example, the receiving device only needs the GOOSE messages to which it subscribes. However, when faced with a large number of GOOSE messages, the receiving device first needs to receive and parse the large number of GOOSE messages one by one in order to determine which GOOSE messages it subscribes to. This results in inefficient and time-consuming in filtering of such GOOSE messages by the CPU. In addition, the current way of CPU processing on GOOSE messages further aggravates the time requirement when dealing with a large number of GOOSE messages.

### SUMMARY

In order to solve the problem of inefficient and time-consuming processing of GOOSE messages in the prior art, the present disclosure provides an embedded system and a message processing method that filter out subscribed GOOSE messages by an FPGA and preconfigure a task triggered by a GOOSE message as multiple subtasks executed by different processing cores, making it possible to save time and improve efficiency when facing a large number of GOOSE messages.

At least one embodiment of the present disclosure provides an embedded system for message processing, which comprises: a field programmable gate array (FPGA) configured to determine at least one first generic obj ect-oriented substation event (GOOSE) message to which the embedded system subscribes from a plurality of externally received GOOSE messages, wherein each first GOOSE message triggers an execution of one first task, and the first task is preconfigured as a plurality of subtasks; a first processing core configured to execute at least one first subtask of the plurality of subtasks; and a second processing core configured to execute at least one second subtask of the plurality of subtasks; wherein an execution of a 1st first subtask of the at least one first subtask is triggered by the first GOOSE message, and the at least one second subtask is executed after an execution of the at least one first subtask is completed.

For example, in the embedded system provided in an embodiment of the present disclosure, the plurality of subtasks are preconfigured to comprise a message moving subtask, a parsing and updating database subtask, and a message publishing subtask that are executed sequentially; wherein the message moving subtask is used to move at least one first GOOSE message from the FPGA to a buffer, the parsing and updating database subtask is used to parse the first GOOSE message in the buffer and update the GOOSE messages stored in the database, and the message publishing subtask is used to broadcast all GOOSE messages currently stored in the database.

For example, in the embedded system provided in an embodiment of the present disclosure, the at least one first subtask comprises the message moving subtask, and the parsing and updating database subtask, and the at least one second subtask comprises the message publishing subtask. The second processing core is further configured to receive an updating instruction from the database and, in response to the updating instruction, to execute the message publishing subtask to broadcast all GOOSE messages currently stored in the database, wherein the updating instruction is sent to the second processing core after the database has been updated.

For example, in the embedded system provided in an embodiment of the present disclosure, execution times of a second subtask of a former first task and a first subtask of a latter first task of two successively executed first tasks at least partially coincide.

For example, in the embedded system provided in an embodiment of the present disclosure, the first processing core is further configured to execute protection tasks; and the second processing core is further configured to execute a data acquisition task and a data transformation task; wherein a primary protection task in the protection tasks has a higher priority than the message moving subtask, the parsing and updating database subtask, and the message publishing subtask, and remaining protection tasks in the protection tasks have lower priorities than the message moving subtask, the parsing and updating database subtask, and the message publishing subtask; and the data acquisition task and the data transformation task have higher priorities than the message moving subtask, the parsing and updating database subtask, and the message publishing subtask.

For example, in the embedded system provided in an embodiment of the present disclosure, the FPGA is configured to determine the at least one first GOOSE message based on a media access control (MAC) address and an application identification of the received GOOSE messages.

For example, in the embedded system provided in an embodiment of the present disclosure, the execution of the 1st first subtask of the at least one first subtask being triggered by the first GOOSE message comprises: receiving an interrupt message by the first processing core from the FPGA, or determining that there is a subscribed GOOSE message in the FPGA by the first processing core when it polls the FPGA.

At least one embodiment of the present disclosure provides a message processing method for an embedded system, which comprises: determining at least one first generic object-oriented substation event (GOOSE) message to which the embedded system subscribes from a plurality of received GOOSE messages, wherein each first GOOSE message triggers an execution of one first task, and the first task is preconfigured as a plurality of subtasks; executing at least one first subtask of the plurality of subtasks; and executing at least one second subtask of the plurality of subtasks, wherein an execution of a 1st first subtask of the at least one first subtask is triggered by the first GOOSE message, and the at least one second subtask is executed after an execution of the at least one first subtask is completed.

For example, in the method provided in an embodiment of the present disclosure, the plurality of subtasks are preconfigured to comprise a message moving subtask, a parsing and updating database subtask, and a message publishing subtask that are executed sequentially, wherein the message moving subtask is executed to move at least one first GOOSE message from a field programmable gate array (FPGA) to a buffer in the embedded system, the parsing and updating database subtask is executed to parse the first GOOSE message in the buffer and update the GOOSE messages stored in the database, and the message publishing subtask is executed to broadcast all GOOSE messages currently stored in the database.

For example, in the method provided in an embodiment of the present disclosure, the at least one first subtask comprises the message moving subtask, and the parsing and updating database subtask, and the at least one second subtask comprises the message publishing subtask. The method further comprises: receiving an updating indication from the database and, in response to the updating indication, executing the message publishing subtask to broadcast all GOOSE messages currently stored in the database, wherein the updating indication is sent after the database has been updated.

For example, in the method provided in an embodiment of the present disclosure, in two first tasks which are executed successively, execution times of a second subtask of a former first task and a first subtask of a latter first task of two adjacent first tasks partially coincide.

For example, the method provided in an embodiment of the present disclosure further comprises: executing protection tasks; and executing a data acquisition task and a data transformation task; wherein a primary protection task in the protection tasks has a higher priority than the message moving subtask, the parsing and updating database subtask, and the message publishing subtask, and remaining protection tasks in the protection tasks have lower priorities than the message moving subtask, the parsing and updating database subtask, and the message publishing subtask; and the data acquisition task and the data transformation task have higher priorities than the message moving subtask, the parsing and updating database subtask, and the message publishing subtask.

For example, in the method provided in an embodiment of the present disclosure, determining the at least one first GOOSE message from the plurality of GOOSE messages comprises: determining the at least one first GOOSE message based on a media access control (MAC) address and an application identification of the received GOOSE messages.

### BRIEF DESCRIPTION OF DRAWINGS

In order to more clearly illustrate the technical solutions of embodiments of the present disclosure, the accompanying drawings of the embodiments will be briefly described below, and it will be apparent that the accompanying drawings described below relate only to some embodiments of the present disclosure and do not limit the present disclosure.
FIG.1 is a schematic diagram of a processing flow of a GOOSE message in the prior art;
FIG. 2 is a schematic diagram of a functional structure of an embedded system provided in at least one embodiment of the present disclosure;
FIG. 3 is a schematic diagram of a structure of an embedded system provided in at least one embodiment of the present disclosure;
FIG. 4 is a schematic diagram of an example process for processing a GOOSE message by an embedded system provided in at least one embodiment of the present disclosure;
FIG. 5 is a schematic diagram of a process for processing a GOOSE message by an embedded system provided in at least one embodiment of the present disclosure.

### DETAILED DESCRIPTION

In order to make the purposes, technical solutions and advantages of the embodiments of the present disclosure more apparent, the technical solutions of the embodiments of the present disclosure will be clearly and completely described below in conjunction with the accompanying drawings. Obviously, the described embodiments are some of the embodiments of the present disclosure, and not all of them. Based on the described embodiments of the present disclosure, all other embodiments obtained by a person of ordinary skill in the art without creative labor fall within the scope of protection of the present disclosure.

Unless otherwise defined, technical or scientific terms used in this disclosure shall have the common meanings as understood by persons having ordinary skill in the art to which this disclosure pertains. The words "first", "second", and similar words as used in this disclosure do not indicate any order, number, or importance, but are used only to distinguish the different components. Similarly, the words "a", "an", or "the" and similar words do not indicate a numerical limitation, but rather the presence of at least one. The words "include" or "comprise", and similar words are intended to mean that the components or objects appearing before the word cover the components or objects listed after the word and their equivalents, and do not exclude other components or objects. The words "connect" or "couple", and similar words are not limited to physical or mechanical connections, but may include electrical connections, whether direct or indirect. The wores "up", "down", "left", "right", etc. are used only to indicate relative position relationships, and when an absolute position of an object being described changes, the relative position relationship may also change accordingly.

At least one embodiment of the present disclosure provides an embedded system for message processing, which comprises: a field programmable gate array (FPGA) configured to determine at least one first generic obj ect-oriented substation event (GOOSE) message to which the embedded system subscribes from a plurality of externally received GOOSE messages, wherein each first GOOSE message triggers an execution of one first task, and the first task is preconfigured as a plurality of subtasks; a first processing core configured to execute at least one first subtask of the plurality of subtasks; and a second processing core configured to execute at least one second subtask of the plurality of subtasks; wherein an execution of a 1st first subtask of the at least one first subtask is triggered by the first GOOSE message, and the at least one second subtask is executed after an execution of the at least one first subtask is completed.

At least one embodiment of the present disclosure provides a message processing method for an embedded system, which comprises: determining at least one first generic object-oriented substation event (GOOSE) message to which the embedded system subscribes from a plurality of received GOOSE messages, wherein each first GOOSE message triggers an execution of one first task, and the first task is preconfigured as a plurality of subtasks; executing at least one first subtask of the plurality of subtasks; and executing at least one second subtask of the plurality of subtasks; wherein an execution of a 1st first subtask of the at least one first subtask is triggered by the first GOOSE message, and the at least one second subtask is executed after an execution of the at least one first subtask is completed.

The present disclosure provides an embedded system and a message processing method, which save time and improve efficiency when facing a large number of GOOSE messages by filtering out subscribed GOOSE messages by an FPGA and pre-configuring a task triggered by a GOOSE message as multiple subtasks executed by different processing cores, thus solving the problem of the inefficient and time-consuming for processing GOOSE messages.

FIG. 2 is a schematic diagram of a functional structure of an embedded system provided in at least one embodiment of the present disclosure.

In FIG. 2, an embedded system 200 includes three functional components, which are a Field Programmable Gate Array (FPGA) 210, a drive 220, and an application program 230. Also illustrated in FIG. 2 is a database 240, which stores GOOSE messages to which the embedded system 200 subscribes. The database 240 may be included within the embedded system 200, for example, the database 240 is part of a memory or storage medium within the embedded system 200. The database 240 may also be a database external to the embedded system 200, for example the database 240 may be any type of a database. Optionally, the database 240 may maintain a fixed number of GOOSE messages, such as 100, and the database 240 may add new GOOSE messages when there are not up to 100 GOOSE messages stored, and after storing enough 100 GOOSE messages, database 240 updates its stored GOOSE messages by using an approach similar to first-in and first-out (FIFO), so that the database 240 always stores the latest 100 GOOSE messages received. Optionally, the number of GOOSE messages maintained by the database 240 may be set according to actual needs, such as less than 100 or more than 100.

The FPGA 210 receives GOOSE messages that are published by other devices or other systems. The FPGA 210 filters out a GOOSE message to which the embedded system 200 subscribes from the received GOOSE messages. For example, the FPGA 210 is preconfigured with a Media Access Control (MAC) address and an application identification of the GOOSE message to which embedded system 200 subscribes, and the FPGA 210 determines a GOOSE message which has the same MAC address and application identification from the received GOOSE messages as the GOOSE message to which embedded system 200 subscribes.

In this implementation, both the drive 220 and the application program 230 can be software or programs running in a processor or processing core. The drive 220 is responsible for invoking the application program 230 when it is informed that there is a GOOSE message to which embedded system 200 subscribes in the FPGA, receives a result fed back by the application program 230, and feeds the result to the FPGA 210.

The application program 230 is responsible for processing GOOSE messages, including, but not limited to, moving the GOOSE messages from the FPGA 210 into a memory or buffer of the embedded system 200, followed by parsing the GOOSE messages one by one by application program 230 and storing the parsed GOOSE messages in the database 240.

The application program 230 may also publish all GOOSE messages currently stored in the database 240. Publishing GOOSE messages in embodiments of the present disclosure refers to broadcasting the messages in a communication network such as an Ethernet, so that other devices, other embedded systems, or other systems in the Ethernet can receive these GOOSE messages. It should be understood that the embedded system 200 may also be in other types of communication networks, which is not limited herein.

Optionally, the application program 230 publishing GOOSE messages can be implemented through the FPGA 210. For example, the application program 230 sends an instruction to the FPGA 210 to cause the FPGA 210 to publish GOOSE messages to the outside. Thereby, the message exchange between the embedded system 200 and the outside is implemented through the FPGA 210 without the need to set any additional interface.

In the embodiment of the present disclosure, by using the FPGA 210 as the "interface" between the embedded system 200 and the outside, GOOSE messages that the embedded system 200 has not subscribed to can be filtered out quickly, thus saving a lot of time for the subsequent GOOSE message processing.

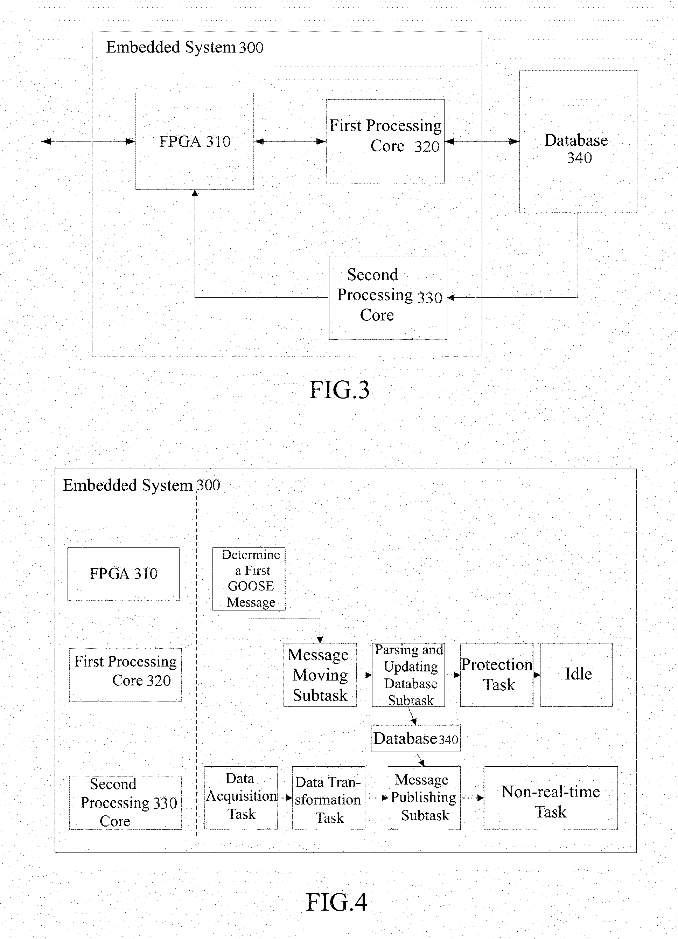

FIG. 3 is a schematic diagram of a structure of an embedded system provided in at least one embodiment of the present disclosure.

In FIG. 3, an embedded system 300 includes an FPGA 310, a first processing core 320, and a second processing core 330. Also illustrated in FIG. 3 is a database 340, which is external to the embedded system 300 and is connected to the first processing core 320 and the second processing core 330. It should be understood that the database 340 may also be provided within the embedded system 300.

The FPGA 310 is used to determine at least one first GOOSE message to which embedded system 300 subscribes from a plurality of externally received GOOSE messages. The function of the FPGA 310 is similarly to that of the FPGA 210 in FIG. 2, which can be found in the description of FPGA 210 above.

In this embodiment, the first task is used to perform processing on the first GOOSE message, for example, the first task is a function implemented by the application program 230 described above.

For example, the plurality of subtasks are preconfigured to comprise a message moving subtask, a parsing and updating database subtask, and a message publishing subtask which are sequentially executed. Among them, the message moving subtask is used to move at least one first GOOSE message from the FPGA to the buffer. The parsing and updating database subtask is used to parse the first GOOSE message in the buffer and update the GOOSE messages stored in the database 340. The message publishing subtask is used to broadcast all the GOOSE messages currently stored in database 340. In this embodiment, the buffer is a buffer in the embedded system 300, for example, a memory, cache, etc. of the embedded system 300.

In this embodiment, each first GOOSE message triggers an execution of one first task, and the first task is preconfigured as a plurality of subtasks. The first processing core 320 is used to execute at least one first subtask of the plurality of subtasks. The second processing core 330 is used to execute at least one second subtask of the plurality of subtasks. An execution of a 1st first subtask of the at least one first subtask is triggered by the first GOOSE message, and the at least one second subtask is executed after an execution of the at least one first subtask is completed.

In this embodiment, the execution of the 1st first subtask of the at least one first subtask is triggered by the first GOOSE message, which may be the case that the first processing core 320 receives an interrupt message from the FPGA 310, e.g., the FPGA 310 interrupts the first processing core 320 through hardware. Alternatively, it may also be the case that the first processing core 320 polls the FPGA 310 and triggers the execution of the 1st first subtask when a subscribed GOOSE message is polled from the FPGA 310. The 1st first subtask is, for example, a message moving subtask.

Optionally, the plurality of subtasks are preconfigured based on a processing flow of the first task, and processing capabilities of the first processing core and the second processing core. For example, if the first task includes steps such as message moving, message parsing, updating the database, message publishing and so on, then the first task may be configured as a message moving subtask executed by the first processing core, and a message parsing subtask, an updating database subtask, and a message publishing subtask executed by the second processing core. Alternatively, the first task may be configured as a message moving subtask and a massage parsing and updating database subtask executed by the first processing core, and a message publishing subtask executed by the second processing core. The subtasks may be distributed approximately evenly between the first processing core and the second processing core based on the load of the subtasks or the processing time of the subtasks, and the subtasks may also be distributed more to the processing core with more processing capability based on the remaining processing capabilities of the first processing core and the second processing core.

Optionally, the first processing core 320 and the second processing core 330 in this embodiment are CPUs, processors, or one or more cores of a multi-core processor, and the like.

In some embodiments, the at least one first subtask includes the message moving subtask, and the parsing and updating database subtask, and the at least one second subtask includes the message publishing subtask. The message publishing subtask is triggered by the database 340. For example, the database 340 sends an updating indication to the second processing core 330 after being updated. The second processing core 330 receives the updating indication from the database and, in response to the updating indication, executes the message publishing subtask to broadcast all GOOSE messages currently stored in the database 340.

Optionally, all currently stored GOOSE messages are broadcast by the second processing core 330. Alternatively, the second processing core 330 moves all currently stored GOOSE messages from the database 340 to the FPGA 310, and the FPGA 310 broadcasts these GOOSE messages to the outside.

In this embodiment, execution times of a second subtask of a former first task and a first subtask of a latter first task of two successively executed first tasks at least partially coincide. For example, with respect to two GOOSE messages received successively, two first tasks will be executed successively. In the two first tasks, the message moving subtask, or the message moving subtask and the parsing and updating database subtask of a 2nd first task may be executed simultaneously with the publishing subtask of a 1st first task.

In this embodiment, the embedded system, when faces a large number of GOOSE messages received at the same time or successively, in addition to using the FPGA to quickly filter out unsubscribed GOOSE messages, uses the first processing core and the second processing core to execute different subtasks respectively. The efficiency of processing GOOSE messages can be further improved and the processing time required can be shortened.

For example, as for the first processing core 320 and the second processing core 330, if the time required to execute the message moving subtask is T1, the time required to execute the parsing and updating database subtask is T2, and the time required to execute the message publishing subtask is T3, the total time required to execute N first tasks successively is less than N*(T1+T2+T3), and N is an integer greater than or equal to 2.

Optionally, the first processing core 320 is further configured to execute a protection task. The second processing core 330 is further configured to execute a data acquisition task and a data transformation task. The protection task has a lower priority than the message moving subtask, the parsing and updating database subtask, and the message publishing subtask. The data acquisition task and the data transformation task have higher priorities than the message moving subtask, the parsing and updating database subtask, and the message publishing subtask. The protection task, the data acquisition task and the data transformation task are real-time tasks that need to be executed by an embedded system (also known as an embedded protection system) applied in a power system. Among them, the data acquisition task usually has the highest priority, and the data acquisition task and the data transformation task need to be executed together successively. Priorities of protection tasks span a wide range, and protection tasks are divided into a primary protection task and secondary protection tasks (which can also be referred to as remaining protection tasks). The primary protection task has a higher priority, e.g., higher than those of the message moving subtask, the parsing and updating database subtask, and the message publishing subtask. The remaining protection tasks have lower priorities than the message moving subtask, the parsing and updating database subtask, and the message publishing subtask, so that the remaining protection tasks in the protection tasks may be executed last among all real-time tasks. For example, while the second processing core 330 is executing the data acquisition task and the data transformation task, it receives an updating instruction from the database and waits for completion of execution of the data acquisition task and the data transformation task with higher priorities before executing the message publishing subtask. It is understood that the first processing core and the second processing core in this embodiment can also execute other real-time tasks as well as non-real-time tasks, with real-time tasks taking precedence over all non-real-time tasks, and real-time tasks being executed in an order of priorities from highest to lowest. It should be understood that the properties of the data acquisition task, the data transformation task and the protection task can all be set, and similarly, the priorities of the message moving subtask, the parsing and updating database subtask, and the message publishing subtask can also be set. The specific way of priority setting can be adjusted in any way according to the actual needs. The first processing core and the second processing core execute various real-time tasks and real-time subtasks in a manner from highest priority to lowest priority.

Optionally, the FPGA 310 also determines at least one first GOOSE message according to the media access control (MAC) address and the application identification of the received GOOSE message. It is noted that both the MAC address and the application identification need to match in order to determine that the received GOOSE message is a first GOOSE message. It should be understood that the FPGA 310 may also use other identification information that uniquely identifies a source of the GOOSE message to determine the first GOOSE message.

In some implementations, different priorities may be set for different GOOSE messages, for example, GOOSE messages from certain MAC addresses have higher priorities and/or GOOSE messages from specific applications (i.e., with specific application identifications) have higher priorities. Accordingly, after the first GOOSE message is determined, the message moving subtask may sort GOOSE messages according to their priorities or mark GOOSE messages with corresponding priorities. The first GOOSE message processed by the parsing and updating database subtask is a sorted GOOSE message, or the parsing and updating database subtask processes the first GOOSE message based on the order of priority.

FIG. 4 illustrates a schematic diagram of an example process for processing a GOOSE message by an embedded system provided in accordance with at least one embodiment of the present disclosure.

FIG. 4 takes the embedded system 300 as an example. The FPGA 310 receives external GOOSE messages and determines the first GOOSE message.

The FPGA 310 sends an interrupt message to the first processing core 320 to cause the first processing core 320 to execute the message moving subtask. After the execution of the message moving subtask is completed, the first processing core 320 executes the parsing and updating database subtask, during which the first processing core 320 updates the database 340. After the execution of the parsing and updating database subtask is completed, the first processing core 320 continues to execute the protection tasks. In the remaining time before the first processing core 320 is interrupted for next time, the first processing core 320 is in an idle state.

After being updated, the database 340 sends an updating indication to the second processing core 330 to trigger the second processing core 330 to execute a message publishing subtask.

The second processing core 330 also executes the data acquisition task and the data transformation task in turn before executing the message publishing subtask. The second processing core 330 continues to execute non-real-time tasks after the execution of the message publishing subtask is completed. Alternatively, the second processing core 330 is in an idle state after the execution of the message publishing subtask is completed.

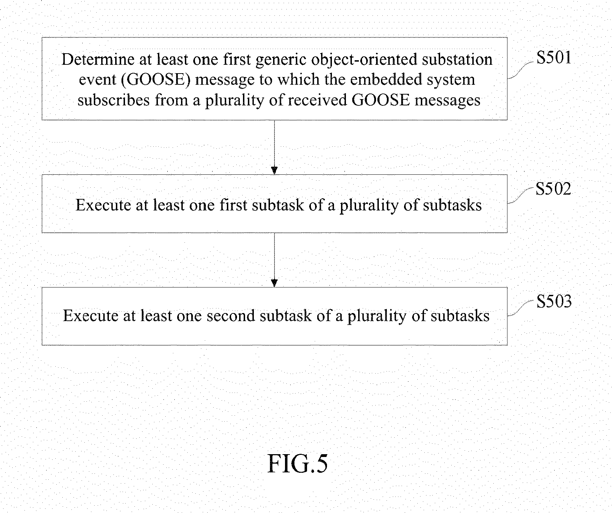

FIG. 5 is a schematic diagram of processing a GOOSE message by an embedded system provided in at least one embodiment of the present disclosure.

This embodiment provides a GOOSE message processing method for an embedded system, which includes the following steps:

S501, determining at least one first generic object-oriented substation event (GOOSE) message to which the embedded system subscribes from a plurality of received GOOSE messages, wherein each first GOOSE message triggers the execution of one first task, and the first task is preconfigured as a plurality of subtasks.

S502, executing at least one first subtask of the plurality of subtasks.

S503, executing at least one second subtask of the plurality of subtasks. The execution of the 1st first subtask of the at least one first subtask is triggered by the first GOOSE message, and the at least one second subtask is executed after the execution of the at least one first subtask is completed.

Step S501 is performed. For example, a plurality of GOOSE messages are received by an FPGA in the embedded system and a first GOOSE message is determined. For another example, a plurality of GOOSE messages are received by an interface of the embedded system and a first GOOSE message is determined from the plurality of GOOSE messages by dedicated hardware or software or a combination of hardware and software. Optionally, at least one first GOOSE message is determined based on the media access control (MAC) address and the application identification of the received GOOSE messages. The manner of determining the first GOOSE message can be found in the relevant description above and will not be described herein.

Optionally, the plurality of subtasks are preconfigured to comprise a message moving subtask, a parsing and updating database subtask, and a message publishing subtask that are executed sequentially. The message moving subtask is executed to move the received at least one first GOOSE message to a buffer in the embedded system, the parsing and updating database subtask is executed to parse the first GOOSE message in the buffer and update the GOOSE message stored in the database, and the message publishing subtask is executed to broadcast all GOOSE messages currently stored in the database. For example, the message moving subtask moves at least one first GOOSE message from the FPGA to the buffer of the embedded system, or moves at least one first GOOSE message from the interface of the embedded system to the buffer.

Step S502 is performed and Step S503 is performed. In some embodiments, at least one first subtask includes the message moving subtask, and the parsing and updating database subtask, and at least one second subtask includes the message publishing subtask. In some further embodiments, the at least one first subtask includes the message moving subtask, and the at least one second subtask includes the parsing and updating database subtask, and the message publishing subtask.

In this embodiment, when step S503 is performed, an updating indication is also received from the database, and in response to the updating indication, a message publishing subtask is executed to broadcast all GOOSE messages currently stored in the database. The updating indication is sent after the database has been updated.

Optionally, in two first tasks executed successively, execution times of a second subtask of a former first task and a first subtask of a latter first task in the two adjacent first tasks partially coincide. For example, the message publishing subtask of the former first task and the message moving subtask of the latter first task are executed in parallel so that at least part of the execution times are coincident.

Optionally, the method in this embodiment may also execute a protection task and execute a data acquisition task and a data transformation task. Among them, the protection task has a lower priority than the message moving subtask, the parsing and updating database subtask, and the message publishing subtask; and the data acquisition task and the data transformation task have higher priorities than the message moving subtask, the parsing and updating database subtask, and the message publishing subtask.

In this embodiment, the first subtask and the second subtask are executed by different processing cores or processors, which can effectively alleviate the problem of inefficiency and time-consuming in processing GOOSE messages due to the serial operating mode.

In general, various example embodiments of the present disclosure may be implemented in hardware or specialized circuitry, software, firmware, logic, or any combination thereof. Certain aspects may be implemented in hardware, while other aspects may be implemented in firmware or software that can be executed by a controller, microprocessor, or other computing device. When aspects of embodiments of the present disclosure are illustrated or described as block diagrams, flowcharts, or by using certain other graphical representations, it will be understood that the blocks, devices, systems, techniques, or methods described herein may be implemented as non-limiting examples in hardware, software, firmware, specialized circuitry or logic, general purpose hardware or controllers, or other computing devices, or some combination thereof.

The memory in embodiments of the present disclosure may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of illustration, but not limitation, many forms of RAM are available, such as a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchronous link dynamic random access memory (SLDRAM), and a direct memory bus random access memory (DR RAM). It should be noted that the memories of the methods described herein are intended to include, but are not limited to, these and any other suitable types of memories. It should be noted that the memories of the methods described herein are intended to include, but are not limited to, these and any other suitable types of memories.

It is noted that the flowcharts and block diagrams in the accompanying drawings illustrate possible implementations of the architecture, functionality, and operation of systems, methods, and computer program products in accordance with various embodiments of the present disclosure. In this regard, each block in a flowchart or block diagram may represent a module, a program segment, or a portion of code, the module, the program segment, or the portion of code including at least one executable instruction for implementing a prescribed logical function. It should also be noted that in some alternative implementations, the functions indicated in the blocks may also occur in a different order than that indicated in the accompanying drawings. For example, two blocks shown in succession can actually be executed substantially in parallel, and they can sometimes be executed in the opposite order, depending on the function involved. Note also that each blcok in the block diagram and/or flowchart, and the combination of blocks in the block diagram and/or flowchart, may be implemented with a dedicated hardware-based system that performs the specified function or operation, or may be implemented with a combination of dedicated hardware and computer instructions.

In general, various example embodiments of the present disclosure may be implemented in hardware or specialized circuitry, software, firmware, logic, or any combination thereof. Certain aspects may be implemented in hardware, while other aspects may be implemented in firmware or software that can be executed by a controller, microprocessor, or other computing device. When aspects of embodiments of the present disclosure are illustrated or described as block diagrams, flowcharts, or by using certain other graphical representations, it will be understood that the blocks, devices, systems, techniques, or methods described herein may be implemented as non-limiting examples in hardware, software, firmware, specialized circuitry or logic, general purpose hardware or controllers, or other computing devices, or some combination thereof.

The exemplary embodiments of the present disclosure described in detail above are merely illustrative and not limiting. It should be understood by those skilled in the art that various modifications and combinations of these embodiments or features thereof may be made without departing from the principles and spirit of the present disclosure, and such modifications shall fall within the scope of the present disclosure.

## Claims

1. An embedded system for message processing, comprising:
a field programmable gate array (FPGA) configured to determine at least one first generic object-oriented substation event (GOOSE) message to which the embedded system subscribes from a plurality of externally received GOOSE messages, wherein each first GOOSE message triggers an execution of one first task, and the first task is preconfigured as a plurality of subtasks;
a first processing core configured to execute at least one first subtask of the plurality of subtasks; and
a second processing core configured to execute at least one second subtask of the plurality of subtasks,
wherein an execution of a 1st first subtask of the at least one first subtask is triggered by the first GOOSE message, and the at least one second subtask is executed after an execution of the at least one first subtask is completed.

2. The embedded system according to claim 1, wherein the plurality of subtasks are preconfigured to comprise a message moving subtask, a parsing and updating database subtask, and a message publishing subtask that are executed sequentially;
wherein the message moving subtask is used to move the at least one first GOOSE message from the FPGA to a buffer, the parsing and updating database subtask is used to parse the first GOOSE message in the buffer and update GOOSE messages stored in a database, and the message publishing subtask is used to broadcast all GOOSE messages currently stored in the database.

3. The embedded system according to claim 2, wherein the at least one first subtask comprises the message moving subtask, and the parsing and updating database subtask, and the at least one second subtask comprises the message publishing subtask,
the second processing core is further configured to receive an updating instruction from the database and, in response to the updating instruction, to execute the message publishing subtask to broadcast the all GOOSE messages currently stored in the database, wherein the updating instruction is sent to the second processing core after the database has been updated.

4. The embedded system as claimed in claim 1, wherein execution times of a second subtask of a former first task and a first subtask of a latter first task of two successively executed first tasks at least partially coincide.

5. The embedded system according to claim 2, wherein the first processing core is further configured to execute protection tasks; and
the second processing core is further configured to execute a data acquisition task and a data transformation task,
wherein a primary protection task in the protection tasks has a higher priority than the message moving subtask, the parsing and updating database subtask, and the message publishing subtask, and remaining protection tasks in the protection tasks have lower priorities than the message moving subtask, the parsing and updating database subtask, and the message publishing subtask, and the data acquisition task and the data transformation task have higher priorities than the message moving subtask, the parsing and updating database subtask, and the message publishing subtask.

6. The embedded system according to claim 1, wherein
the FPGA is configured to determine the at least one first GOOSE message based on a media access control (MAC) address and an application identification of the received GOOSE messages.

7. The embedded system according to claim 1, wherein the execution of the 1st first subtask of the at least one first subtask being triggered by the first GOOSE message comprises:
receiving an interrupt message by the first processing core from the FPGA, or
determining that there is a subscribed GOOSE message in the FPGA by the first processing core when it polls the FPGA.

8. A message processing method for an embedded system, comprising:
determining at least one first generic object-oriented substation event (GOOSE) message to which the embedded system subscribes from a plurality of received GOOSE messages, wherein each first GOOSE message triggers an execution of one first task, and the first task is preconfigured as a plurality of subtasks;
executing at least one first subtask of the plurality of subtasks; and
executing at least one second subtask of the plurality of subtasks,
wherein an execution of a 1st first subtask of the at least one first subtask is triggered by the first GOOSE message, and the at least one second subtask is executed after an execution of the at least one first subtask is completed.

9. The message processing method according to claim 8, wherein the plurality of subtasks are preconfigured to comprise a message moving subtask, a parsing and updating database subtask, and a message publishing subtask that are executed sequentially;
wherein the message moving subtask is executed to move the at least one first GOOSE message from a field programmable gate array (FPGA) to a buffer in the embedded system, the parsing and updating database subtask is executed to parse the first GOOSE message in the buffer and update GOOSE messages stored in the database, and the message publishing subtask is executed to broadcast all GOOSE messages currently stored in the database.

10. The message processing method according to claim 9, wherein the at least one first subtask comprises the message moving subtask, and the parsing and updating database subtask, and the at least one second subtask comprises the message publishing subtask, the method further comprises:
receiving an updating instruction from the database and, in response to the updating instruction, executing the message distribution subtask to broadcast all GOOSE messages currently stored in the database, wherein the updating instruction is sent after the database has been updated.

11. The message processing method according to claim 10, wherein in two first tasks which are executed successively, execution times of a second subtask of a former first task and a first subtask of a latter first task of two adjacent first tasks partially coincide.

12. The message processing method according to claim 9, wherein the method further comprises:
executing protection tasks; and
executing a data acquisition task and a data transformation task,
wherein a primary protection task in the protection tasks has a higher priority than the message moving subtask, the parsing and updating database subtask, and the message publishing subtask, and remaining protection tasks in the protection tasks have lower priorities than the message moving subtask, the parsing and updating database subtask, and the message publishing subtask, and the data acquisition task and the data transformation task have higher priorities than the message moving subtask, the parsing and updating database subtask, and the message publishing subtask.

13. The message processing method according to claim 8, wherein determining the at least one first GOOSE message from the plurality of GOOSE messages, comprising:
determining the at least one first GOOSE message based on a media access control (MAC) address and an application identification of the received GOOSE messages.
